(19) Europäisches Patentamt
European Patent Office
Office européen des brevets

(11) **EP 3 677 450 B1**

(12) **EUROPEAN PATENT SPECIFICATION**

(45) Date of publication and mention
of the grant of the patent:
**12.10.2022 Bulletin 2022/41**

(51) International Patent Classification (IPC):
***B60C 19/00*** *(2006.01)*     ***B60C 17/00*** *(2006.01)*
*B60C 13/00* *(2006.01)*

(21) Application number: **18856751.5**

(22) Date of filing: **31.08.2018**

(52) Cooperative Patent Classification (CPC):
**B60C 19/00;** B60C 2013/006; B60C 2017/0063

(86) International application number:
**PCT/JP2018/032461**

(87) International publication number:
**WO 2019/054211 (21.03.2019 Gazette 2019/12)**

(54) **PNEUMATIC TIRE**

LUFTREIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.09.2017 JP 2017175251**

(43) Date of publication of application:
**08.07.2020 Bulletin 2020/28**

(73) Proprietor: **Sumitomo Rubber Industries, Ltd.
Kobe-shi, Hyogo 651-0072 (JP)**

(72) Inventors:
• **NAKAJIMA Hiroki
Kobe-shi
Hyogo 651-0072 (JP)**

• **YOSHIZUMI Takuma
Kobe-shi
Hyogo 651-0072 (JP)**

(74) Representative: **Manitz Finsterwald
Patent- und Rechtsanwaltspartnerschaft mbB
Martin-Greif-Strasse 1
80336 München (DE)**

(56) References cited:
EP-A1- 3 551 480     EP-A2- 2 524 818
WO-A1-03/105511     WO-A1-2004/091943
WO-A1-2013/054757     JP-A- 2005 088 874
JP-A- 2006 315 517     JP-A- 2007 297 036

**Description**

**TECHNICAL FIELD**

The present invention relates to a pneumatic tire in which an electronic component such as RFID is provided.

**BACKGROUND ART**

In recent years, with the progress of electronic device technology, in pneumatic tires (hereinafter, also simply referred to as "tires"), a technology has been proposed in which an electronic component such as transponder for RFID (Radio Frequency Identification) (hereinafter, also simply referred to as "RFID") is to be attached to a tire to manage data such as manufacturing control, customer information, travel history, etc.

The transponder is a small, lightweight electronic component consisting of a semiconductor chip with a transmitter/receiver circuit, a control circuit, a memory, etc., and an antenna. As the transponder, Battery-less one is often used which can transmit various data as response radio waves when it receives an inquiry radio wave, which is used as electrical energy.

As a method of attaching such an electronic component to a tire, a method has been proposed in which the electronic component is adhered to the surface of the tire after vulcanization by adhesion or the like (for example, Patent Document 1). However, when this method is adopted, there is a problem that the electronic component easily falls-off while traveling on the road surface, although there is little risk that the electronic component will be destroyed.

Then, in order to prevent falling-off of electronic component, a method has been proposed in which the electronic component is integrated with a tire by vulcanization adhesion accompanying vulcanization molding after molding the green tire while embedding the electronic component inside (for example, Patent Document 2).

**PRIOR ART DOCUMENTS**

**PATENT DOCUMENTS**

[Patent document 1] JP2006-168473 A;
[Patent document 2] JP2008-265750 A;

EP 3 551 480 A1 which is a prior art document according to Art. 54(3) EPC discloses a pneumatic tire in which an electronic component is disposed, wherein a protective layer for protecting the electronic component is provided at a position located at an inner side than the carcass and at an outer side than the inner liner in the axial direction of the tire, and at a position overlapping the sidewall portion in the tire radial direction, and wherein the electronic component is disposed between the carcass and the protective layer. EP 2 524 818 A1 discloses a pneumatic tire comprising an electronic component which is embedded in a squeeze layer on the inner side of a carcass.

WO 03/105511 A1 also discloses a pneumatic tire according to related technology.

**SUMMARY OF INVENTION**

**PROBLEM TO BE SOLVED BY THE INVENTION**

However, when the electronic component is disposed in the inside of the tire, particularly in the bead portion with a small amount of deformation during travelling from the viewpoint of securing durability, there is no risk of falling off of the electronic component, but there is a risk of causing communication failure, since electromagnetic waves are used to read and write data in the inside of the electronic component and interference with a metal wheel may occur.

Therefore, it is conceivable to dispose the electronic component on the sidewall portion from the viewpoint of securing sufficient communication performance by suppressing the occurrence of communication failure in such an electronic component. However, at the sidewall portion, the deformation of the tire appears largest during travelling, which may cause reduction in the life of the tire or damage of the electronic component, and this method has not been realized yet.

Therefore, an object of the present invention is to provide a manufacturing technology for tire that does not cause reduction in tire life or damage of the electronic component even if the electronic component is disposed in the sidewall portion in order to secure sufficient communication performance.

## MEANS FOR SOLVING THE PROBLEM

This object is satisfied by a pneumatic tire comprising the features of claim 1.

In the pneumatic tire, an electronic component is disposed,

wherein
a protective layer for protecting the electronic component is provided at a position located at an inner side than the carcass and at an outer side than the inner liner in the axial direction of the tire, and at a position overlapping the sidewall portion in the tire radial direction;
the protective layer has higher rigidity and lower heat generation compared to the sidewall; and
the electronic component is disposed between the carcass and the protective layer.

E* (1) of the protective layer at 70 °C and E* (2) of the sidewall at 70 °C satisfy the following formula:

$$3\mathrm{MPa} \leqq E^*(1) - E^*(2).$$

E* (1) of the protective layer at 70 °C and E* (2) of the sidewall at 70 °C may satisfy the following formula:

$$4\mathrm{MPa} \leqq E^*(1) - E^*(2).$$

E* (1) of the protective layer at 70 °C and E* (2) of the sidewall at 70 °C may satisfy the following formula:

$$5\mathrm{MPa} \leqq E^*(1) - E^*(2).$$

tan $\delta$ (1) of the protective layer at 70 °C and tan $\delta$ (2) of the sidewall at 70 °C may satisfy the following formula:

$$\tan \delta (1) + \tan \delta (2) \leqq 0.25.$$

tan $\delta$ (1) of the protective layer at 70 °C and tan $\delta$ (2) of the sidewall at 70 °C may satisfy the following formula:

$$\tan \delta (1) + \tan \delta (2) \leqq 0.20.$$

tan $\delta$ (1) of the protective layer at 70 °C and tan $\delta$ (2) of the sidewall at 70 °C may satisfy the following formula:

$$\tan \delta (1) + \tan \delta (2) \leqq 0.15.$$

The electronic component may be embedded at a position of $\pm 70\%$, above or below around the position of the maximum tire width, with respect to the distance from the position of the maximum tire width to the bottom of bead core in the equatorial direction in the cross-sectional view of a tire.

## EFFECT OF THE INVENTION

According to the present invention, a manufacturing technology for a tire is provided that does not cause reduction in tire life and occurrence of damage of the electronic component even when an electronic component is disposed in the sidewall portion in order to secure sufficient communication performance.

## BRIEF DESCRIPTION OF DRAWINGS

[Figure 1] This figure is a cross-sectional view showing a configuration of a pneumatic tire according to an embodiment of the present invention.

[Figure 2A] It is a figure explaining the disposed position of the electronic component in an Example of this invention.
[Figure 2B] It is a figure explaining the disposed position of the electronic component in an Example of this invention.
[Figure 2C] It is a figure explaining the disposed position of the electronic component in an Example of this invention.
[Figure 3] It is a figure explaining the communication measurement points in the Examples of this invention.

## EMBODIMENT FOR CARRYING OUT THE INVENTION

Hereinafter, the present invention will be described based on the embodiments.

[1] Background of the Present Invention

As described above, in order to suppress the occurrence of communication failure due to interference between the wheel and the electronic component, it is desirable to mount the electronic component on the sidewall portion. However, in the sidewall portion, deformation of the tire while traveling appears most greatly, which may cause reduction in the life of the tire or damage to electronic component.

Therefore, the inventors of the present invention have conceived to provide a protective layer for protecting the electronic component by suppressing deformation of the sidewall portion, at a position inside the carcass and outside the inner liner in the tire axial direction, and at a position overlapping the sidewall portion in the tire radial direction. And as a result of studies, it turned out that occurrence of damage of a tire or damage of electronic component can be sufficiently suppressed by making rigidity of the protective layer higher than rigidity of a sidewall.

That is, when the difference between the rigidity of the protective layer and the rigidity of the side wall is small and the protective layer is soft, deformation of the side wall during traveling cannot be suppressed, which causes reduction in the life of the tire and may cause damage of the electronic component. In addition, when the difference between the rigidity of the protective layer and the rigidity of the sidewall is small and the protective layer is hard, the propagation of impact during traveling may cause damage of the electronic component or may cause remarkable lowering of the trauma resistance of the sidewall itself.

On the other hand, when the rigidity of the protective layer is made sufficiently large relative to the rigidity of the sidewall, deformation of the sidewall during traveling can be suppressed and propagation of impact during traveling can be suppressed, and it becomes possible to sufficiently suppress the occurrence of damage of electronic component and tire.

It has been found that the occurrence of damage of the electronic component and the tire can be sufficiently suppressed by doing as described above. However, it has been found also that there is a new problem of heat generation, as it is.

That is, it has been found that, even if an electronic component is provided in the sidewall portion in order to secure sufficient communication performance, since the sidewall portion generates heat due to rolling of the tire during traveling, the life of the tire may be reduced and the communication accuracy of the electronic component immediately after traveling may be lowered, due to the heat, and data may be lost due to repeated high temperature conditions.

Therefore, the present inventors have further studied the solution to the problem of heat generation. As a result, it has been found that, by making the heat generation of the protective layer lower than the heat generation of the side wall, specifically, by lowering the loss tangent of the rubber composition, the heat generation of the protective layer and the side wall can be reduced, the reduction of tire life due to the influence of heat generation during traveling, the lowering of communication accuracy immediately after traveling and the loss of data generated due to repeated high temperature conditions can be prevented.

As described above, in the present invention, the occurrence of damage of the tire and damage of electronic component can be suppressed, and good communication performance of the electronic component and good durability performance of the tire can be obtained, by providing a protective layer having higher rigidity and lower heat generation as compared to the sidewall, at a position located at an inner side than the carcass and at an outer side than the inner liner and by disposing the electronic component between the carcass and the protective layer.

[2] Embodiment of the present invention

1. Tire Configuration

(1) Overall Configuration

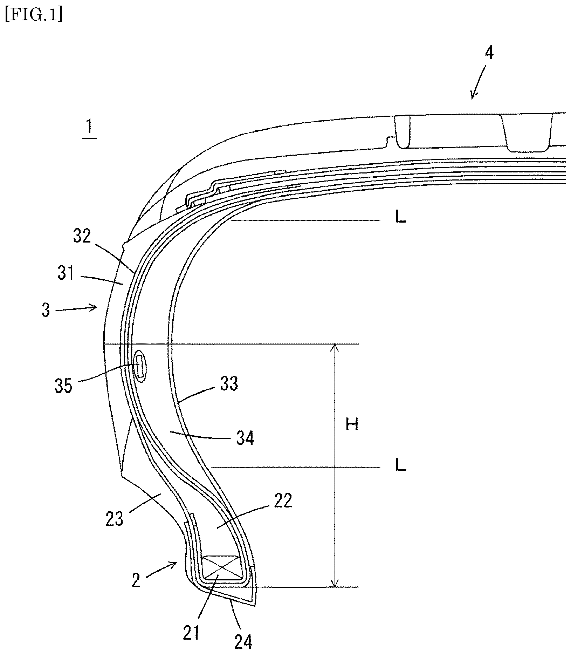

FIG. 1 is a cross-sectional view showing the configuration of a tire according to an embodiment of the present invention, and more specifically, a cross-sectional view of a tire of size 235 / 75R15. In FIG. 1, 1 is a tire, 2 is a bead portion, 3 is a sidewall portion, 4 is a tread, 21 is a bead core, 22 is a bead apex, 23 is a clinch (an external member located inside a sidewall in the tire radial direction, and located outer side of a bead apex in the tire axial direction), and 24 is a chafer. In addition, 31 is a sidewall, 32 is a carcass, 33 is an inner liner, and 34 is a protective layer, and 35 denotes an electronic component. In this case, in FIG. 1, H is the distance from the position of the tire maximum width to the bottom of the bead core.

As shown in FIG. 1, in the present embodiment, a protective layer 34, which is higher in rigidity and lower in heat generation than the sidewall 31, is provided inside the carcass 32 and outside the inner liner 33 of the sidewall portion 3. The electronic component 35 is disposed between the carcass 32 and the protective layer 34.

(2) Configuration of the sidewall portion

The sidewall portion 3 includes the inner liner 33, the carcass 32, and the sidewall 31 in this order from the inner side in the tire axial direction, and the protective layer 34 is provided between the inner liner 33 and the carcass 32. Here, the side wall 31, the carcass 32 and the inner liner 33 are each manufactured using the same rubber composition as conventional rubber composition.

(3) Protective Layer

(a) Rigidity of Protective Layer

As described above, in the present embodiment, the protective layer 34 has higher rigidity than the sidewall 31. The rigidity of rubber is usually represented by E* (complex elastic modulus), and high rigidity means that the value of E* is large. In the present application, E* means an absolute value.

When E* at 70°C of the protective layer 34 is E*(1) MPa and E* at 70°C of the side wall 31 is E*(2) MPa, (E*(1)-E*(2)) satisfies the following formula.

$$3\mathrm{MPa} \leqq \mathrm{E^*(1)} - \mathrm{E^*(2)}$$

And it is preferable to satisfy the following formula.

$$4\mathrm{MPa} \leqq \mathrm{E^*(1)} - \mathrm{E^*(2)}$$

And, it is more preferable to satisfy the following formula.

$$5\mathrm{MPa} \leqq \mathrm{E^*(1)} - \mathrm{E^*(2)}$$

There is no need to set the upper limit of the (left side of) above formula in order to exert the effects of the present invention, but from the viewpoint of the ease of manufacturing a tire, 20 MPa or less is preferable, and 15 MPa or less is more preferable.

In this case, E* in the above is the value measured under the conditions shown below using a visco-elastic spectrometer (for example, "VESF-3" manufactured by Iwamoto Seisakusho Ltd.) in accordance with the prescription of "JIS K 6394".

| | |
|---|---|
| Initial strain: | 10% |
| Amplitude: | $\pm$ 2.0% |
| Frequency: | 10 Hz |
| Deformation mode: | Tension |
| Measurement temperature: | 70 °C |

Thus, by making E* of the protective layer 34 higher than E* of the sidewall 31, in particular, by appropriately controlling their difference as in the above formula, deformation of the sidewall during traveling can be suppressed and propagation of impact during traveling can be suppressed as well, and the occurrence of damage of the electronic component and tire can be sufficiently suppressed. The E* at 70 °C of the rubber composition for a sidewall is, for example, 2 to 24 MPa, and the E* at 70 °C of the rubber composition for a protective layer is, for example, 7 to 130 MPa.

And when using a rubber composition for side wall of E* (1) in the range illustrated above, a rubber composition for protective layers of E* (2) which satisfies the formula is used. Similarly, in the case of using a rubber composition for a protective layer of E* (2) in the range of exemplified above, a rubber composition for a sidewall of E* (1) satisfying the above formula is used.

(b) Heat generation property of protective layer

In the present embodiment, the protective layer 34 has lower heat generation than that of the sidewall 31. The heat generation of rubber is usually expressed by tan δ (loss tangent), and low heat generation means that the value of tan δ is small.

In the present embodiment, assuming that tan δ at 70°C of the protective layer 34 and the sidewall 31 are tan δ (1) and tan δ (2), respectively, it is preferable that (tan δ (1) + tan δ (2)) satisfies the following formula.

$$\tan \delta (1) + \tan \delta (2) \leqq 0.25$$

And it is more preferable that the following formula is satisfied.

$$\tan \delta (1) + \tan \delta (2) \leqq 0.20$$

It is further preferable that the following formula is satisfied.

$$\tan \delta (1) + \tan \delta (2) \leqq 0.15$$

There is no need to set the lower limit of the above formula in order to exert the effects of the present invention, but from the viewpoint of the ease of manufacturing the tire, 0.07 or more is preferable, and 0.10 or more is more preferable (as the right side of the formula).

In the above, tan δ is a value measured according to the same manner as the measurement of E* described above.

Thus, the heat generation of the protective layer 34 and the side wall 31 can be reduced by making the heat generation of the protective layer 34 lower than the heat generation of the side wall 31 and appropriately controlling each tan δ. In addition, it is possible to prevent bursts generated due to the influence of heat generation during traveling, lowering of communication accuracy immediately after traveling, and loss of data generated due to repeated high temperature conditions.

The tan δ at 70 °C of the rubber composition for a sidewall is, for example, 0.02 to 0.30, and the tan δ at 70 °C of the rubber composition for a protective layer is, for example, 0.02 to 0.24.

And when using the rubber composition for sidewalls having tan δ (1) in the range exemplified above, the rubber composition for protective layers having tan δ (2) satisfying the above-mentioned formula is used. Similarly, when using the rubber composition for a protective layer of tan δ (2) in the range exemplified above, the rubber composition for a sidewall having tan δ (1) satisfying the above-mentioned formula is used.

(c) Rubber Composition of Protective Layer

In the present embodiment, the rubber composition used for producing the protective layer can be obtained by kneading a rubber component as a main component and various compounding materials such as a reinforcing material, an anti-aging agent, an additive and the like using a rubber kneading apparatus such as an open roll or a banbury mixer.

(i) Rubber component

As the rubber component, for example, diene rubbers such as natural rubber (NR), isoprene rubber (IR), butadiene rubber (BR), styrene butadiene rubber (SBR), acrylonitrile butadiene rubber (NBR), chloroprene rubber (CR), butyl rubber (IIR), and the like may be mentioned. Among them, combined use of isoprene rubber (NR or IR) and BR is preferable because low fuel consumption and good durability can be obtained.

Content of the isoprene-based rubber (NR or IR) is preferably 30 parts by mass or more, and more preferably 35 parts by mass or more in 100 parts by mass of the rubber component. Moreover, it is preferably 50 parts by mass or less, and more preferably 45 parts by mass or less. By setting the content of the isoprene-based rubber (NR and IR) as described above, sufficient breaking elongation and sufficient bending crack growth resistance can be secured.

Content of BR is preferably 50 parts by mass or more, and more preferably 55 parts by mass or more in 100 parts by mass of the rubber component. Moreover, it is preferably 70 parts by mass or less, and more preferably 65 parts by mass or less. By setting the content of BR in the rubber component as above, sufficient resistance to bending crack growth and sufficient breaking strength can be secured.

In this case, the BR is not particularly limited. For example, BR having a high cis content, BR containing syndiotactic polybutadiene crystals (SPB-containing BR), modified BR, and the like can be used. Among them, SPB-containing BR is preferable from the viewpoint that extrusion processability can be greatly improved by the intrinsic orientation crystal component.

In the combined use of isoprene rubber (NR or IR) and BR, the total content of isoprene rubber (NR or IR) and BR is preferably 80 parts by mass or more per 100 parts by mass of the rubber component, and more preferably 90 parts by mass or more. By setting the total content of isoprene-based rubber (NR and IR) and BR within the above range, sufficient low fuel consumption and sufficient durability can be secured.

(ii) Carbon black

It is preferable that carbon black is compounded as a reinforcing material in the rubber composition of the present embodiment. Examples of carbon black include GPF, HAF, ISAF, SAF, FF, FEF and the like. One of these carbon blacks may be used alone, or two or more thereof may be used in combination. Among these, FEF is preferable.

Content of carbon black in the above rubber composition is preferably 20 parts by mass or more, and more preferably 25 parts by mass or more with respect to 100 parts by mass of the rubber component. Moreover, it is preferably 40 parts by mass or less, and more preferably 35 parts by mass or less. By setting the content of carbon black in the rubber composition within the above range, high $E^*$ and low $\tan \delta$ can be achieved.

(iii) Vulcanizing agent and vulcanization accelerator

Sulfur is used as a vulcanizing agent, and its content is preferably 1 part by mass or more, and more preferably 2 parts by mass or more with respect to 100 parts by mass of the rubber component. Moreover, it is preferably 8 parts by mass or less, and more preferably 6 parts by mass or less. By setting the content of sulfur within the above range, sufficient steering stability can be secured, the bloom and adhesion of sulfur can be suppressed, and the durability can be secured. Content of sulfur is pure sulfur content, and, when using insoluble sulfur, it is content except oil content.

Sulfur is usually used together with a vulcanization accelerator. Content of the vulcanization accelerator is preferably 1.5 parts by mass or more, and more preferably 2.0 parts by mass or more with respect to 100 parts by mass of the rubber component. Moreover, it is preferably 5.0 parts by mass or less, and more preferably 4.0 parts by mass or less. By setting the content of the vulcanization accelerator in the above range, the effects of the present invention tend to be favorably obtained. As specific examples of the vulcanization accelerators, sulfenamide type, thiazole type, thiuram type, thiourea type, guanidine type, dithiocarbamic acid type, aldehyde-amine type or aldehyde-ammonia type, imidazoline type, and xanthate type vulcanization accelerators can be mentioned. These vulcanization accelerators may be used alone or in combination of two or more. Among these, sulfenamide type vulcanization accelerators are preferred because the scorch time and the vulcanization time can be balanced.

(iv) Stearic acid

As stearic acid, conventionally known products can be used. For example, products manufactured by NOF Corporation, Kao Corporation, Wako Pure Chemical Industries, Ltd., Chiba Fatty Acid Corporation, etc. can be used. When stearic acid is used, content of stearic acid is preferably 0.5 part by mass or more, and more preferably 1 part by mass or more with respect to 100 parts by mass of the rubber component. Moreover, it is preferably 10 parts by mass or less, and more preferably 5 parts by mass or less. By setting the content of stearic acid within the above range, the effects of the present invention tend to be obtained favorably.

(v) Zinc oxide

As zinc oxide, conventionally known ones can be used. For example, products manufactured by Mitsui Mining & Smelting Co., Ltd., Toho Zinc Co., Ltd., Hakusui Tech Co., Ltd., Shodo Chemical Industry Co., Ltd., Sakai Chemical Industry Co., Ltd., etc. can be used. When using zinc oxide, content of the zinc oxide is preferably 0.5 part by mass or more, and more preferably 1 part by mass or more with respect to 100 parts by mass of the rubber component. Moreover, it is preferably 10 parts by mass or less, and more preferably 5 parts by mass or less. By setting the content of zinc oxide within the above range, the effects of the present invention tend to be obtained favorably.

(vi) Anti-aging agent

As the anti-aging agent, an amine-type anti-aging agent having an excellent ozone resistance effect is suitable. The amine-type anti-aging agent is not particularly limited, and examples thereof include amine derivatives such as diphenylamine-type, p-phenylenediamine-type, naphthylamine-type and ketone amine condensate-type ones. These may be used alone, and two or more may be used in combination. Examples of diphenylamine type derivatives include p-(p-toluenesulfonylamide) -diphenylamine, octylated diphenylamine, 4,4'-bis ($\alpha$, $\alpha'$-dimethylbenzyl) diphenylamine and the like. Examples of p-phenylenediamine type derivatives include N- (1,3-dimethylbutyl) -N'-phenyl-p-phenylenediamine (6PPD), N-phenyl-N'-isopropyl-p-phenylenediamine (IPPD) and N, N'-di-2-naphthyl-p-phenylenediamine. Examples of the naphthylamine type derivatives include phenyl-$\alpha$-naphthylamine and the like. Among them, phenylenediamine type and ketone amine condensate type are preferable. Content of the anti-aging agent is preferably 0.3 part by mass or more, and more preferably 0.5 part by mass or more with respect to 100 parts by mass of the rubber component. Moreover, it is preferably 8 parts by mass or less, and more preferably 2.5 parts by mass or less.

(vii) Waxes

Waxes are not particularly limited, and petroleum waxes such as paraffin wax and microcrystalline wax; natural waxes such as plant waxes and animal waxes; synthetic waxes such as polymers of ethylene and propylene, etc. can be mentioned. These may be used alone or in combination of two or more. As specific examples of wax, products manufactured by Ouchi Shinko Chemical Co., Ltd., Nippon Seiro Co., Ltd., Seiko Kagaku Co., Ltd., etc. can be used. When a wax is used, content of the wax is preferably 0.5 part by mass or more, and more preferably 1 part by mass or more with respect to 100 parts by mass of the rubber component. Moreover, it is preferably 10 parts by mass or less, and more preferably 7 parts by mass or less.

(viii) Oils

Examples of oils include process oils, vegetable oils and fats, and mixtures thereof. As the process oil, for example, paraffin-based process oil, aroma-based process oil, naphthene-based process oil and the like can be used. Examples of vegetable fats and oils include castor oil, cottonseed oil, linseed oil, rapeseed oil, soybean oil, palm oil, peanut oil, rosin, pine oil, pine tar, tall oil, corn oil, rice oil, beni flower oil, sesame oil, olive oil, sunflower oil, palm kernel oil, camellia oil, jojoba oil, macadamia nut oil, tung oil and the like. These may be used alone or may be used in combination of two or more. Specific examples of the oil which can be used include products manufactured by Idemitsu Kosan Co., Ltd., Sankyo Yuka Kogyo Co., Ltd., Japan Energy Co., Ltd., Orisoi Company, H & R Company, Toyokuni Oil Co., Ltd., Showa Shell Co., Ltd., Fuji Kosan Co., Ltd., etc. Content of oil is preferably 0.5 part by mass or more, and more preferably 1 part by mass or more with respect to 100 parts by mass of the rubber component. Moreover, it is preferably 10 parts by mass or less, and more preferably 5 parts by mass or less.

(ix) Others

In addition to the above components, the rubber composition of the present embodiment may also contain compounding materials conventionally used in the rubber industry. For example, inorganic fillers such as silica, talc and calcium carbonate, and organic fillers such as cellulose fibers, softeners such as liquid rubber and adhesive resins, vulcanizing agents other than sulfur, organic crosslinking agents, and the like may be compounded as needed. About the compounding quantity of each compounding material, it can be selected suitably.

As described above, the protective layer is preferably adjusted so that E* and tan $\delta$ satisfy the predetermined relational expression for the side wall. As a method of adjusting E* of the protective layer, it is preferable to adjust with the amount of carbon black or sulfur. That is, it is preferable to adjust the amount of sulfur first, then adjust the amount of carbon black. This allows that the aimed E* and tan $\delta$ can be achieved without the need for excessive trial and error.

(4) Electronic component

An electronic component is disposed in the tire according to the present embodiment. Specific examples of the electronic components include RFID, pressure sensor, temperature sensor, acceleration sensor, magnetic sensor, groove depth sensor, and the like. Above all, RFID can store and read a large volume of information without contact. That is, it can store tire manufacturing information, management information, customer information, and the like in addition to data such as pressure and temperature. Therefore, it is particularly preferred.

In the present embodiment, the electronic component 35 is disposed between the protective layer 34 of the sidewall portion 3 and the carcass 32. The specific disposing position is not particularly limited as far as reliable information communication is possible and the electronic component is not easily damaged by the deformation of the tire. However, the electronic component is preferably embedded at a position of ±70% (L in FIG. 1), above and below around the position of the maximum tire width, with respect to the distance from the position of the maximum tire width to the bottom of bead core (H in FIG. 1) in the equatorial direction, as a position where the damage of the electronic component by the deformation of the tire is relatively small and communication from the outside can be made without problems when assembled in the rim.

When the electronic component 35 is disposed within the above range, reliable communication of information is possible, damage of the electronic component due to deformation of the tire is small, and problems in manufacturing are also small.

The longitudinal size (overall length including the IC chip and the antenna) of the electronic component to be disposed in the present embodiment is preferably 18 cm or less, more preferably 9 cm or less, further more preferably 4 cm or less, and most preferably 2 cm or less. With such a small size, although stress may be concentrated on the surrounding rubber, the durability of the tire can be stably maintained, since the protective layer 34 is provided and consideration is given to local stress concentration in the present embodiment, as described above. At this time, bending of the antenna portion can be kept to a minimum by arranging the antenna portion of the electronic component to extend in an orthogonal direction to the cord of carcass.

2. Manufacture of Tire

The tire according to the present embodiment can be manufactured by a usual method except for disposing an electronic component in the middle of molding. That is, the side wall 31 and the protective layer 34 are molded by extrusion processing according to the shape of the bead apex 22 in the unvulcanized stage of the rubber composition, and then pasted together with the other tire members on a tire forming machine according to the usual manner, and an unvulcanized tire is formed. In the middle of this molding, an electronic component is disposed at a predetermined position between the protective layer 34 and the carcass 32.

Thereafter, a tire is manufactured by heating and pressing the molded unvulcanized tire in which an electronic component is disposed, in a vulcanizer.

**EXAMPLES**

1 . Compounding materials and Formulation

Table 1 shows the compounding materials. Table 2 and Table 3 show the formulation.

[Table 1]

| Compounding materials | Product Name | Manufacturer |
|---|---|---|
| (Rubber component) | | |
| NR | TSR20 | |
| BR | UBEPOL BR 150B | Ube Industries, Ltd. |
| (Reinforcing material) | | |
| Carbon Black (FEF) | N550 | Showa Cabot Co., Ltd. |
| (Softener) | | |
| Oil | Diana Process AH-24 | Idemitsu Kosan Co., Ltd |
| (Anti-aging agent) | | |
| Anti-aging agent 1 | NOCLAC 6C | Ouchi Shinko Chemical Co., Ltd. |
| Anti-aging agent 2 | NOCLAC RD | Ouchi Shinko Chemical Co., Ltd. |
| (Vulcanizing agent) | | |
| Sulfur | Insoluble Sulfur | Tsurumi Chemical Industry Co., Ltd. |
| Vulcanization accelerator | SANCELERNS-G | Sanshin Chemical Industry Co., Ltd. |

(continued)

| (Others) | | |
|---|---|---|
| Stearic acid | Camellia oil | NOF CORPORATION |
| Zinc oxide | Zinc Flower 1 | Mitsui Mining & Smelting Co., Ltd. |
| Wax | SANNOC N | Ouchi Shinko Chemical Co., Ltd. |

[Table 2]

| | Formulation | | | | | | |
|---|---|---|---|---|---|---|---|
| | 1 | 2 | 3 | 4 | 5 | 6 | 7 |
| NR | 40 | 40 | 40 | 40 | 40 | 40 | 40 |
| BR | 60 | 60 | 60 | 60 | 60 | 60 | 60 |
| Carbon Black | 50 | 30 | 60 | 30 | 30 | 35 | 45 |
| Zinc oxide | 1.5 | 1.5 | 1.5 | 1.5 | 1.5 | 1.5 | 1.5 |
| Stearic acid | 2 | 2 | 2 | 2 | 2 | 2 | 2 |
| Oil | 10 | 5 | - | 20 | 5 | 10 | - |
| Wax | 1.5 | 1.5 | 1.5 | 1.5 | 1.5 | 1.5 | 1.5 |
| Anti-aging agent 1 | 1.5 | 1.5 | 1.5 | 1.5 | 1.5 | 1.5 | 1.5 |
| Anti-aging agent 2 | 1 | 1 | 1 | 1 | 1 | 1 | 1 |
| Sulfur | 2 | 2 | 2 | 6.5 | 6.5 | 5.5 | 2 |
| Vulcanization accelerator | 1 | 1 | 1 | 2.5 | 2.5 | 2.5 | 1 |
| E* | 3.5 | 3.5 | 8.5 | 3.5 | 9.0 | 6.0 | 5 |
| tan $\delta$ | 0.18 | 0.10 | 0.20 | 0.08 | 0.07 | 0.09 | 0.17 |

[Table 3]

| | Formulation | | | | |
|---|---|---|---|---|---|
| | 8 | 9 | 10 | 11 | 12 |
| NR | 40 | 40 | 40 | 45 | 45 |
| BR | 60 | 60 | 60 | 55 | 55 |
| Carbon Black | 47 | 55 | 50 | 30 | 30 |
| Zinc oxide | 1.5 | 1.5 | 1.5 | 1.5 | 1.5 |
| Stearic acid | 2 | 2 | 2 | 2 | 2 |
| Oil | 6 | - | 5 | 7 | 20 |
| Wax | 1.5 | 1.5 | 1.5 | 1.5 | 1.5 |
| Anti-aging agent 1 | 1.5 | 1.5 | 1.5 | 1.5 | 1.5 |
| Anti-aging agent 2 | 1 | 1 | 1 | 1 | 1 |
| Sulfur | 2 | 7 | 7 | 7 | 3.5 |
| Vulcanization accelerator | 1 | 5.2 | 4.3 | 4.3 | 2.1 |
| E* | 4 | 23.5 | 18.5 | 9 | 3.5 |
| tan $\delta$ | 0.18 | 0.05 | 0.07 | 0.02 | 0.05 |

2. Preparation of Pneumatic Tire

Based on the formulations in Table 1, Table 2 and Table 3, using a banbury mixer manufactured by Kobe Steel Co., Ltd., compounding materials other than sulfur and the vulcanization accelerator are kneaded, then sulfur and a vulcanization accelerator are added to the kneaded product thus obtained, followed by kneading using an open roll, and unvulcanized rubber compositions for a protective layer and a side wall can be obtained respectively. Moreover, according to Example 1 in 2013-245339A, the rubber composition for coating electronic component 35 can be obtained.

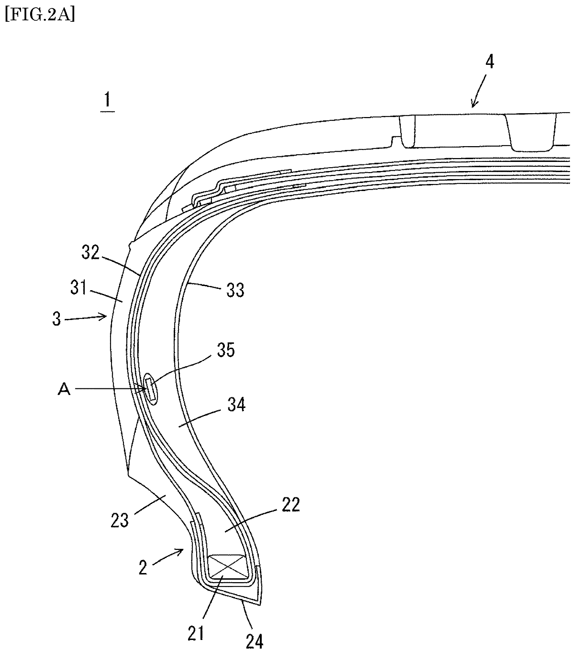

Then, the obtained unvulcanized rubber composition is molded into the shape of a protective layer or a sidewall, respectively, and the molded product is laminated and pasted together with other tire members on a tire molding machine. A test tire (tire size: 245 / 45R18) can be obtained by placing the electronic component 35 coated with an unvulcanized rubber composition on a position shown in any of FIG. 2A to FIG. 2C described later and carrying out the vulcanization under the condition of 150 °C for 30 minutes. As the electronic component 35, an RFID in which a 30 mm antenna is provided on both sides of a 3 mm $\times$ 3 mm $\times$ 0.4 mm IC chip can be used.

The physical properties (E* and tan $\delta$) in each of the formulations shown in Tables 2 and 3 above are measured by the following method.

That is, a rubber sample is extracted from each of the protective layer and the sidewall of each pneumatic tire, and E* (unit: MPa) and tan $\delta$ are measured by using a viscoelastic spectrometer ("VESF-3" manufactured by Iwamoto Seisakusho) under the following conditions.

| | |
|---|---|
| Initial strain: | 10% |
| Amplitude: | $\pm$ 2.0% |
| Frequency: | 10 Hz |
| Deformation mode: | Tension |
| Measurement temperature: | 70 °C |

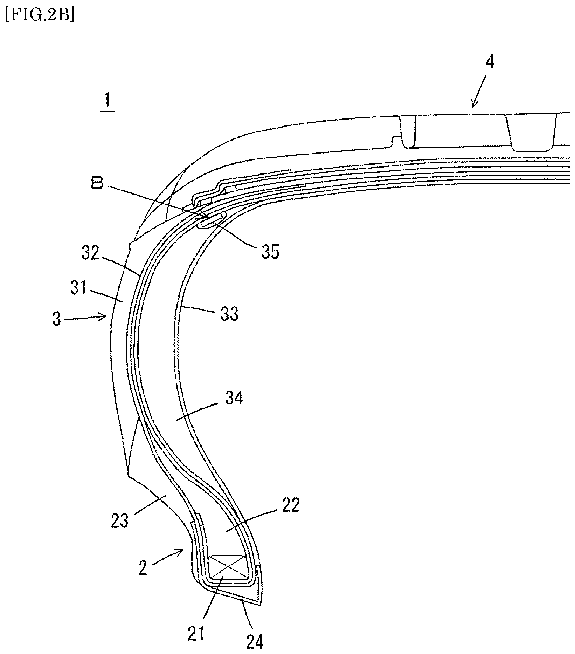

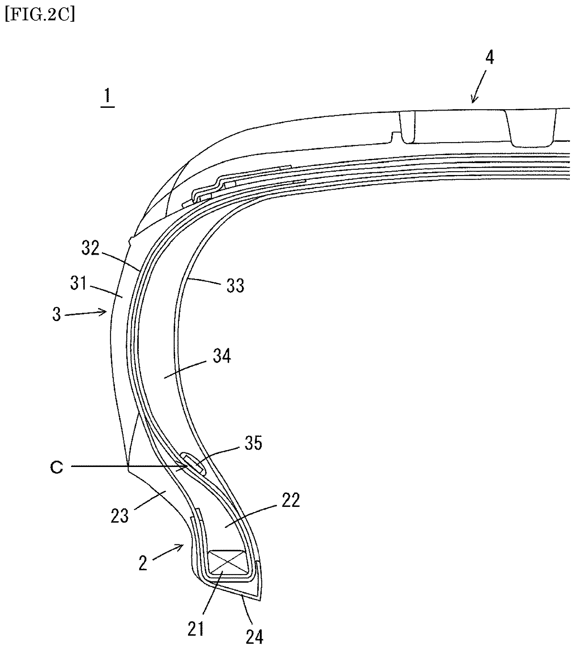

Specific insertion positions of the electronic component 35 are shown in FIGs. 2A to 2C. In FIG. 2A, the electronic component 35 is provided at a position of 78% from the bottom of the bead core; in FIG. 2B, the electronic component 35 is provided at a position of 140% from the bottom of the bead core; and in FIG. 2C, the electronic component 35 is provided at a position of 47% from the bottom of the bead core. These values are values with respect to the distance from the position of the tire maximum width to the bottom of the bead core.

Tables 4 to 6 show the relationship between the formulation and physical properties of the protective layer and the sidewall, the position of the electronic component, the durability of the tire, and the communication performance of the electronic component.

The durability of the tire is evaluated as "Y"(acceptable) if it is possible to drive 10,000 km on a general road, and if it is not possible, evaluated as "NG"(not acceptable). Regarding the driving conditions, the mounting rim is 18 $\times$ 8 J, the tire internal pressure is 200 kPa, the test vehicle is a front wheel drive vehicle, the displacement is 3500 cc, and the tire mounting position is all wheels.

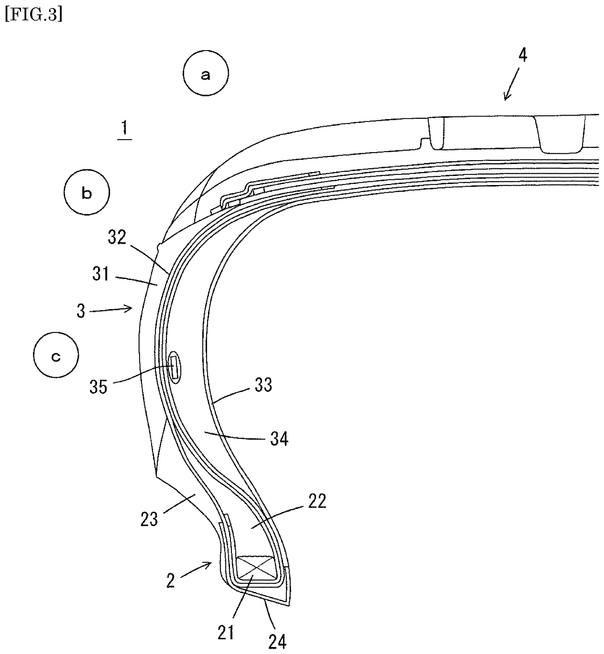

The evaluation method of communication performance is a method where transceivers for the electronic component are installed at three measurement points (a to c) of the circles shown in FIG. 3 and it is judged whether communication of data with the electronic component is possible.

Specifically, the tire is assembled in a rim and mounted in a vehicle for conducting the measurement, and the ratio of (the number of readable positions after the durability evaluation / the number of readable positions before the durability evaluation) is calculated. The evaluation result is "EX"(excellent), if the average value of the four tire is 60% or more; "G"(good), if 50% or more and less than 60%; "Y"(acceptable), if more than 0% and less than 50%; and "NG"(not acceptable), if 0% or readable position before durability evaluation is 0.

[Table 4]

| Examples/Comparative examples | | Compar. example 1 | Compar. example 2 | Compar. example 3 | Compar. example 4 | Compar. example 5 | Compar. example 6 |
|---|---|---|---|---|---|---|---|
| Formu-lation | protective layer | 1 | 1 | 1 | 2 | 3 | 5 |
| | sidewall | 1 | 1 | 1 | 2 | 2 | 5 |
| insertion position of electronic component | | A | B | C | A | A | A |

(continued)

| Examples/Comparative examples | | Compar. example 1 | Compar. example 2 | Compar. example 3 | Compar. example 4 | Compar. example 5 | Compar. example 6 |
|---|---|---|---|---|---|---|---|
| E* | protective layer | 3.5 | 3.5 | 3.5 | 3.5 | 8.5 | 9 |
| | sidewall | 3.5 | 3.5 | 3.5 | 3.5 | 3.5 | 9 |
| | difference | 0 | 0 | 0 | 0 | 5 | 0 |
| tan δ | protective layer | 0.18 | 0.18 | 0.18 | 0.10 | 0.20 | 0.07 |
| | sidewall | 0.18 | 0.18 | 0.18 | 0.10 | 0.10 | 0.07 |
| | sum | 0.36 | 0.36 | 0.36 | 0.20 | 0.30 | 0.14 |
| durability of tire | | NG | NG | NG | NG | Y | Y |
| communication performance of electronic component | | - | - | - | - | NG | NG |

[Table 5]

| Examples/ Comparative examples | | Example 1 | Example 2 | Example 3 | Example 4 | Example 5 | Example 6 | Example 7 |
|---|---|---|---|---|---|---|---|---|
| Formu -lation | protective layer | 5 | 5 | 5 | 5 | 5 | 5 | 5 |
| | sidewall | 2 | 2 | 2 | 4 | 6 | 1 | 7 |
| insertion position of electronic component | | A | B | C | A | A | A | A |
| E* | protective layer | 9 | 9 | 9 | 9 | 9 | 9 | 9 |
| | sidewall | 3.5 | 3.5 | 3.5 | 3.5 | 6 | 3.5 | 5 |
| | difference | 5.5 | 5.5 | 5.5 | 5.5 | 3.0 | 5.5 | 4 |
| tan δ | protective layer | 0.07 | 0.07 | 0.07 | 0.07 | 0.07 | 0.07 | 0.07 |
| | sidewall | 0.10 | 0.10 | 0.10 | 0.08 | 0.09 | 0.18 | 0.17 |
| | sum | 0.17 | 0.17 | 0.17 | 0.15 | 0.16 | 0.25 | 0.24 |
| durability of tire | | Y | Y | Y | Y | Y | Y | Y |
| communication performance of electronic component | | G | Y | Y | EX | G | Y | G |

[Table 6]

| Examples/ Comparative examples | | Example 8 | Example 9 | Example 10 | Example 11 | Example 12 | Example 13 |
|---|---|---|---|---|---|---|---|
| Formu -lation | protective layer | 5 | 9 | 10 | 11 | 11 | 11 |
| | sidewall | 8 | 1 | 1 | 12 | 4 | 8 |

(continued)

| Examples/ Comparative examples | | Example 8 | Example 9 | Example 10 | Example 11 | Example 12 | Example 13 |
|---|---|---|---|---|---|---|---|
| insertion position of electronic component | | A | A | A | A | A | A |
| E* | protective layer | 9 | 23.5 | 18.5 | 9 | 9 | 9 |
| | sidewall | 4 | 3.5 | 3.5 | 3.5 | 3.5 | 4 |
| | difference | 5 | 20 | 15 | 5.5 | 5.5 | 5 |
| tan $\delta$ | protective layer | 0.07 | 0.05 | 0.07 | 0.02 | 0.02 | 0.02 |
| | sidewall | 0.18 | 0.18 | 0.18 | 0.05 | 0.08 | 0.18 |
| | sum | 0.25 | 0.23 | 0.25 | 0.07 | 0.1 | 0.20 |
| durability of tire | | Y | Y | Y | Y | Y | Y |
| communication performance of electronic component | | EX | Y | Y | Y | Y | G |

As mentioned above, although the present invention was explained based on embodiments, the present invention is not limited to the above-mentioned embodiments. Various modifications can be made to the above embodiments within the of the present invention as defined by the appended claims.

## DESCRIPTION OF THE REFERENCE SIGNS

1　tire
2　bead portion
3　sidewall portion
4　tread
21　bead core
22　bead apex
23　clinch
24　chafer
31　sidewall
32　carcass
33　inner liner
34　protective layer
35　electronic component
H　Distance from the position of the maximum tire width to the bottom of bead core
L　The range in which the electronic component is embedded

## Claims

1. A pneumatic tire (1) in which an electronic component (35) is disposed, wherein

   a protective layer (34) for protecting the electronic component (35) is provided at a position located inwards of the carcass (32) and outwards of the inner liner (33) in the axial direction of the tire, and at a position overlapping the sidewall portion (3) in the tire radial direction;
   the protective layer (34) has a larger complex elastic modulus E* at 70 °C and lower heat generation tan $\delta$ (1) compared to the sidewall (31), wherein
   the values of the complex elastic moduli E* (1), E* (2) and of heat generation tan $\delta$ are measured using a visco-elastic spectrometer in accordance with the prescription of "JIS K 6394" at an initial strain of 10% with an amplitude of $\pm$ 2.0% and at a frequency of 10 Hz in tensile deformation mode;

the electronic component (35) is disposed between the carcass (32) and the protective layer (34), and

the complex elastic modulus E* (1) of the protective layer (34) at 70 °C and the complex elastic modulus E* (2) of the sidewall (31) at 70 °C satisfy the following formula:

$$3\text{MPa} \leqq E^{*}(1) - E^{*}(2).$$

2. The pneumatic tire (1) according to claim 1, wherein
   E* (1) of the protective layer (34) at 70 °C and E* (2) of the sidewall (31) at 70 °C satisfy the following formula:

$$4\text{MPa} \leqq E^{*}(1) - E^{*}(2).$$

3. The pneumatic tire (1) according to claim 2, wherein
   E* (1) of the protective layer (34) at 70 °C and E* (2) of the sidewall (31) at 70 °C satisfy the following formula:

$$5\text{MPa} \leqq E^{*}(1) - E^{*}(2).$$

4. The pneumatic tire (1) according to any one of claims 1-3, wherein
   E* (1) of the protective layer (34) at 70 °C and E* (2) of the sidewall (31) at 70 °C satisfy the following formula:

$$20\text{MPa} \geqq E^{*}(1) - E^{*}(2).$$

5. The pneumatic tire (1) according to claim 4, wherein
   E* (1) of the protective layer (34) at 70 °C and E* (2) of the sidewall (31) at 70 °C satisfy the following formula:

$$15\text{MPa} \geqq E^{*}(1) - E^{*}(2).$$

6. The pneumatic tire (1) according to any one of claims 1-5, wherein
   tan $\delta$ (1) of the protective layer (34) at 70 °C and tan $\delta$ (2) of the sidewall (31) at 70 °C satisfy the following formula:

$$\tan \delta\,(1) + \tan \delta\,(2) \leqq 0.25.$$

7. The pneumatic tire (1) according to claim 6, wherein
   tan $\delta$ (1) of the protective layer (34) at 70 °C and tan $\delta$ (2) of the sidewall (31) at 70 °C satisfy the following formula:

$$\tan \delta\,(1) + \tan \delta\,(2) \leqq 0.20.$$

8. The pneumatic tire (1) according to claim 7, wherein
   tan $\delta$ (1) of the protective layer (34) at 70 °C and tan $\delta$ (2) of the sidewall (31) at 70 °C satisfy the following formula:

$$\tan \delta\,(1) + \tan \delta\,(2) \leqq 0.15.$$

9. The pneumatic tire (1) according to any one of claims 1-8, wherein
   tan $\delta$ (1) of the protective layer (34) at 70 °C and tan $\delta$ (2) of the sidewall (31) at 70 °C satisfy the following formula:

$$\tan \delta\,(1) + \tan \delta\,(2) \geqq 0.07.$$

10. The pneumatic tire (1) according to claim 9, wherein

tan δ (1) of the protective layer (34) at 70 °C and tan δ (2) of the sidewall (31) at 70 °C satisfy the following formula:

$$\tan \delta\,(1) + \tan \delta\,(2) \geqq 0.10.$$

11. The pneumatic tire (1) according to any one of claims 1-10, wherein
the electronic component (35) is embedded at a position (L) of ±70% above or below around the position of the maximum tire width with respect to the distance (H) from the position of the maximum tire width to the bottom of bead core (21) in the equatorial direction in the cross-sectional view of the tire (1).

12. The pneumatic tire (1) according to any one of claims 1-11, wherein the electronic component (35) is a transponder for RFID.

**Patentansprüche**

1. Luftreifen (1), in dem eine elektronische Komponente (35) angeordnet ist,

wobei eine Schutzschicht (34) zum Schutz der elektronischen Komponente (35) an einer Position innen von der Karkasse (32) und außen von dem Innerliner (33) in der axialen Richtung des Reifens und an einer Position, die den Seitenwandabschnitt (3) in der radialen Richtung des Reifens überlappt, angeordnet ist,
wobei die Schutzschicht (34) einen größeren komplexen Elastizitätsmodul E* bei 70 °C und eine geringere Wärmeentwicklung tan δ(1) im Vergleich mit der Seitenwand (31) aufweist;
wobei die Werte der komplexen Elastizitätsmoduln E*(1) und E*(2) und der Wärmeentwicklung tan δ unter Verwendung eines Viskoelastizitätsspektrometers gemäß der Vorschrift "JIS K 6349" bei einer anfänglichen Dehnung von 10 % mit einer Amplitude von ± 2,0 % und mit einer Frequenz von 10 Hz im Zugverformungsmodus gemessen werden;
die elektronische Komponente (35) zwischen der Karkasse (32) und der Schutzschicht (34) angeordnet ist, und der komplexe Elastizitätsmodul E*(1) der Schutzschicht (34) bei 70 °C und der komplexe Elastizitätsmodul E*(2) der Seitenwand (31) bei 70 °C die folgende Formel erfüllen:

$$3\text{MPa} \leqq E^*(1) - E^*(2).$$

2. Luftreifen (1) nach Anspruch 1, wobei
E*(1) der Schutzschicht (34) bei 70 °C und E*(2) der Seitenwand (31) bei 70 °C die folgende Formel erfüllen:

$$4\text{MPa} \leqq E^*(1) - E^*(2).$$

3. Luftreifen (1) nach Anspruch 2, wobei
E*(1) der Schutzschicht (34) bei 70 °C und E*(2) der Seitenwand (31) bei 70 °C die folgende Formel erfüllen:

$$5\text{MPa} \leqq E^*(1) - E^*(2).$$

4. Luftreifen (1) nach einem der Ansprüche 1-3, wobei
E*(1) der Schutzschicht (34) bei 70 °C und E*(2) der Seitenwand (31) bei 70 °C die folgende Formel erfüllen:

$$20\text{MPa} \geqq E^*(1) - E^*(2).$$

5. Luftreifen (1) nach Anspruch 4, wobei
E*(1) der Schutzschicht (34) bei 70 °C und E*(2) der Seitenwand (31) bei 70 °C die folgende Formel erfüllen:

$$15\text{MPa} \geqq E^*(1) - E^*(2).$$

**6.** Luftreifen (1) nach einem der Ansprüche 1-5, wobei
tan δ(1) der Schutzschicht (34) bei 70 °C und tan δ(2) der Seitenwand (31) bei 70 °C die folgende Formel erfüllen:

$$\tan δ(1) + \tan δ(2) \leqq 0{,}25.$$

**7.** Luftreifen (1) nach Anspruch 6, wobei
tan δ(1) der Schutzschicht (34) bei 70 °C und tan δ(2) der Seitenwand (31) bei 70 °C die folgende Formel erfüllen:

$$\tan δ(1) + \tan δ(2) \leqq 0{,}20.$$

**8.** Luftreifen (1) nach Anspruch 7, wobei
tan δ(1) der Schutzschicht (34) bei 70 °C und tan δ(2) der Seitenwand (31) bei 70 °C die folgende Formel erfüllen:

$$\tan δ(1) + \tan δ(2) \leqq 0{,}15.$$

**9.** Luftreifen (1) nach einem der Ansprüche 1-8, wobei
tan δ(1) der Schutzschicht (34) bei 70 °C und tan δ(2) der Seitenwand (31) bei 70 °C die folgende Formel erfüllen:

$$\tan δ(1) + \tan δ(2) \geqq 0{,}07.$$

**10.** Luftreifen (1) nach Anspruch 9, wobei
tan δ(1) der Schutzschicht (34) bei 70 °C und tan δ(2) der Seitenwand (31) bei 70 °C die folgende Formel erfüllen:

$$\tan δ(1) + \tan δ(2) \geqq 0{,}10.$$

**11.** Luftreifen (1) nach einem der Ansprüche 1-10, wobei
die elektronische Komponente (35) an einer Position (L) von ±70% oberhalb oder unterhalb um die Position der maximalen Reifenbreite herum eingebettet ist, bezogen auf den Abstand (H) von der Position der maximalen Reifenbreite zum Boden des Wulstkerns (21) in der Äquatorialrichtung in der Querschnittsansicht des Reifens (1).

**12.** Luftreifen (1) nach einem der Ansprüche 1-11, wobei die elektronische Komponente (35) ein Transponder für RFID ist.

**Revendications**

**1.** Bandage pneumatique (1) dans lequel un composant électronique (35) est disposé, dans lequel

une couche protectrice (34) destinée à protéger le composant électronique (35) est prévue à une position située à l'intérieur de la carcasse (32) et à l'extérieur de la doublure interne (33) dans la direction axiale du pneumatique, et à une position chevauchant la portion formant paroi latérale (3) dans la direction radiale du pneumatique ; la couche protectrice (34) a un module d'élasticité complexe E* à 70 °C plus élevé et un tan δ (1) de génération de chaleur plus bas comparé à la paroi latérale (31), dans lequel
les valeurs des modules d'élasticité complexes E*(1), E*(2) et de tan δ de génération de chaleur sont mesurées en utilisant un spectromètre de viscoélasticité selon la prescription de la norme industrielle japonaise « JIS K 6394 » à une contrainte initiale de 10 %, avec une amplitude de ± 2,0 % et à une fréquence de 10 Hz en mode de déformation en traction ; le composant électronique (35) est disposé entre la carcasse (32) et la couche protectrice (34), et
le module d'élasticité complexe E* (1) de la couche protectrice (34) à 70 °C et le module d'élasticité complexe E* (2) de la paroi latérale (31) à 70 °C satisfont la formule suivante :

$$3\,MPa \leqq E*(1) - E*(2).$$

**2.** Bandage pneumatique (1) selon la revendication 1, dans lequel
E* (1) de la couche protectrice (34) à 70 °C et E* (2) de la paroi latérale (31) à 70 °C satisfont la formule suivante :

$$4MPa \leq E^*(1) - E^*(2).$$

**3.** Bandage pneumatique (1) selon la revendication 2, dans lequel
E* (1) de la couche protectrice (34) à 70 °C et E* (2) de la paroi latérale (31) à 70 °C satisfont la formule suivante :

$$5MPa \leq E^*(1) - E^*(2).$$

**4.** Bandage pneumatique (1) selon l'une quelconque des revendications 1 à 3, dans lequel
E* (1) de la couche protectrice (34) à 70 °C et E* (2) de la paroi latérale (31) à 70 °C satisfont la formule suivante :

$$20MPa \geq E^*(1) - E^*(2).$$

**5.** Bandage pneumatique (1) selon la revendication 4, dans lequel
E* (1) de la couche protectrice (34) à 70 °C et E* (2) de la paroi latérale (31) à 70 °C satisfont la formule suivante :

$$15MPa \geq E^*(1) - E^*(2).$$

**6.** Bandage pneumatique (1) selon l'une quelconque des revendications 1 à 5, dans lequel
tan δ (1) de la couche protectrice (34) à 70 °C et tan δ (2) de la paroi latérale (31) à 70 °C satisfont la formule suivante :

$$\tan \delta \ (1) + \tan \delta \ (2) \leq 0{,}25.$$

**7.** Bandage pneumatique (1) selon la revendication 6, dans lequel
tan δ (1) de la couche protectrice (34) à 70 °C et tan δ (2) de la paroi latérale (31) à 70 °C satisfont la formule suivante :

$$\tan \delta \ (1) + \tan \delta \ (2) \leq 0{,}20.$$

**8.** Bandage pneumatique (1) selon la revendication 7, dans lequel
tan δ (1) de la couche protectrice (34) à 70 °C et tan δ (2) de la paroi latérale (31) à 70 °C satisfont la formule suivante :

$$\tan \delta \ (1) + \tan \delta \ (2) \leq 0{,}15.$$

**9.** Bandage pneumatique (1) selon l'une quelconque des revendications 1 à 8, dans lequel
tan δ (1) de la couche protectrice (34) à 70 °C et tan δ (2) de la paroi latérale (31) à 70 °C satisfont la formule suivante :

$$\tan \delta \ (1) + \tan \delta \ (2) \geq 0{,}07.$$

**10.** Bandage pneumatique (1) selon la revendication 9, dans lequel
tan δ (1) de la couche protectrice (34) à 70 °C et tan δ (2) de la paroi latérale (31) à 70 °C satisfont la formule suivante :

$$\tan \delta \ (1) + \tan \delta \ (2) \geq 0{,}10.$$

**11.** Bandage pneumatique (1) selon l'une quelconque des revendications 1 à 10, dans lequel
le composant électronique (35) est encastré à une position (L) de ± 70 % au-dessus ou en dessous autour de la position de la largeur maximum du pneumatique par rapport à la distance (H) depuis la position de la largeur maximum du pneumatique jusqu'au fond d'âme de talon (21) dans la direction de l'équateur dans la vue de section transversale du pneumatique (1).

12. Bandage pneumatique (1) selon l'une quelconque des revendications 1 à 11, dans lequel le composant électronique (35) est un transpondeur pour RFID.

[FIG.1]

[FIG.2A]

[FIG.2B]

[FIG.2C]

[FIG.3]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006168473 A
- JP 2008265750 A
- EP 3551480 A1
- EP 2524818 A1
- WO 03105511 A1